# EUROPEAN PATENT APPLICATION

(11) **EP 2 479 533 A1**
(43) Date of publication of application: **25.07.2012**
(21) Application number: 11425016.0
(22) Date of filing: 24.01.2011
(51) Int. Cl.: G01B 9/02, G01B 11/22

(54) **Laser system for ablation monitoring**

(71) Applicant: Universita' Degli Studi di Bari, 70121 Bari (IT); Consiglio Nazionale Delle Ricerche, 00185 Roma (IT)
(72) Inventor: Scamarcio, Gaetano, 70126 Bari (IT); Dabbicco, Maurizio, 70126 Bari (IT); Lugara, Pietro Mario, 70126 Bari (IT); DeLucia, Francesco, 70126 Bari (IT); Mezzapesa, Francesco Paolo, 70013 Castellana Grotte (BA) (IT); Ancona, Antonio, 70126 Bari (IT); Sibillano, Teresa, 70126 Bari (IT)
(74) Representative: Bruni, Giovanni

(57) **Abstract**

Laser system and method for measuring in real time the variation of the laser ablation depth by means of self-mixing interferometry characterized by a reflecting surface subjected to ablation, a laser diode with an integrated photodiode for the self-mixing signal detecting, a lens for sending a portion of the radiation emitted by the laser diode on the surface subjected to ablation and for sending in the cavity of the laser diode a portion of the radiation emitted by the laser diode and back-reflected by the surface subjected to ablation.

## Description

Object of the present invention is a new system for measuring in real-time the progression of the ablation front, based on self-mixing interferometry in laser diodes. The ablation consists in removing material from the surface of a sample by means of the passage from the solid to the vapour state. On this physical process, many techniques of laser micro-processing are based, in which the ablation is obtained by exposing localized surface areas of a sample to intense laser pulses. Aim of the present invention is to use self-mixing interferometry to measure the progression of the ablation front in the area subjected to erosion due to the exposition to intense laser radiation. It is an important novelty with respect to the yet known use of the self-mixing interferometry to measure the relative displacement at the source of the whole sample.

Recently the field of the laser technology for micro-processing and for material treatment has established itself as one of the possible technologies in many strategic sectors: the automotive one, the aeronautical one, the photovoltaic one, the bio-medical one, the naval one, the mechanic one, the mechanotronic one etc.... It is expected a rapid growth of the laser processing in the photovoltaic and semiconductor industries too (especially for the thin film technology), in the electronic one of the organic displays (OLED) and in the production of miniaturized components with micro-mechanic to bio-medical applications. Since the end of the '90, the power laser technology functioning in continuous wave (CW) has consolidated, revolutionizing the welding and cutting processes in the industrial productions. In the meantime, it has remarkably increased the push to device miniaturization and to the need to carry out, with extreme precision, different kind of processing as for example cutting, drilling and surface processing, whose dimensioning are not greater than tens of micron with tolerances lower than few microns. For this reason, in the future it is expected a second revolution due to the introduction of the ultra-short pulses laser technology in the micro-processing. Such technology is expected to be more flexible, reliable and less expensive than the mechanic technologies or EDM (Electron Discharge Machining) used at the moment to provide structures with dimensions lower than 100 µm. Another push is expected from the recent development of new ultra-short pulses laser sources (disc or fiber regenerative amplifiers) functioning at repetition frequencies of many MHz and at pulse energies sufficient to remove suitable volumes of ablated material by pulse. Recently the cost of this new generation of ultra-short pulse laser sources has remarkably reduced thus reducing also the cost for mm³ of ablated material, regardless the kind of material to be treated (also the most difficult ones to process by means of traditional techniques as the diamond or tungsten ones). Therefore the increasing use of this technology in the industrial productions needs the development of no-contact diagnostic systems, which are robust, reliable, cheap and able to monitor exactly the processing in function of the time and/or operative parameters characteristic of the process. Today reliable systems with these features heave not yet been provided. In the state of the art there are known many methods for ablation measuring. Yet, none of these is able to monitor in real-time and exactly the progression of the ablation front in function of the operative parameters to provide process control. In particular, concerning the interferometric techniques, in the scientific publication S. Bera, A. J. Sabbah, C. G. Durfee and J. A. Squier, "Develpoment of a femtosecond micromachining workstation by use of spectral interferometry" Opt., Lett. 30, 373-375 (2005), it is described a method based on the spectral inteferometry to characterize in-situ the ablation process. The ablation depth measuring is carried out by means of a traditional interferometer Michelson, wherein the probe radiation is generated by a Ti-sapphire laser system and the interference diagram is measured by a spectrometer together with a CCD camera. Even though the technique reaches a resolution of few nanometers, the experimental evidence is limited to the tomography of very thin materials (400 nm) and the method uses acquisition and processing techniques (max 1 KHz) little compatible with the characteristics of time of the industrial laser ablation processes. Likewise, in the scientific publication V. V. Temnov, K. Sokolowski-Tinten, P. Zhou and D. van der Linde, "Ultrafast imaging interferometry at femtosecond-laser excited surfaces", J. Opt. Soc. Am. B. 23, 1954-1964 (2006), a double arm conventional interferometer is used to detect the superficial modifications induced laser pulses at fs on a sample of GaAs. Even if the spatial resolution is 1 µm, the algorithmic interpretation of the interference diagram, sometimes subjected to information loss due to aliasing, results limited to the analysis of the superficial modifications of the ablated material.

Concerning the nan-interferometric techniques, in the scientific publication by S. Doring et al., Optics Express Vol. 1B, 20395 (2010) it is described a method based on the ablation process imaging provided by a radiation propagating across the material in the orthogonal plane to the direction of hole progression. The method can be used only on materials transparent to the imaging radiation (for example semiconductors or glasses) and on samples previously suitably shaped. It needs a high frame-rate CCD camera and is provided with limited resolutions (sub-millimeter). In this article, it is not mentioned the possibility to measure in real time the hole depth, but it is only demonstrated the capability of the technique to display the proceeding in the hole making with a relatively low resolution (sub-millimeter). The publication by C-H Lin et al. Meas. Sci. Technol. Vol. 21, pp 025307 (2010) describes a method based on the principle of the confocal microscopy, wherein the radiation reflected by the material surface crosses a diaphragm arranged in confocal position, before reaching the detector. The method requires the working stopping to allow measuring. Even if high sensibility is needed, the resolution is in the order of some tens of micron. Finally the technique requires the usage of mechanic moving portions and an algorithm to research the best position in the diaphragm. The method has been tested only on one low repetition drilling system (< 100 Hz). Yet another scientific article by P. J. L. Webster et al Optics Express, Vol. 15, pp 14967 (2007) describes a method based on the low coherence optic tomography, able to function in real-time also at high repetition frequencies (> kHz). The method requires the use of a spectrometer, a rapid algorithm to analyze the spectral information and an outer interferometer to stabilize the surface reference level. The resolution is limited by the spectral width of the source used and is esteemed in 6 microns.

In the state of the art, there exist also many rights, but each one is provided with limitations and technical drawbacks, which are instead solved by the method according to the present invention. Among these ones; the US patent application n° US 2009314752 (2009) which describes a method for detecting the discontinuities of the ablation process for writing lines by measuring the intensity of the radiation generated and propagated during the same process. The frequencies are very high. The limit of such patent is to use a comparative and not direct procedure to find differences or processing defects. The international patent application n° WO2009137494 (2009) describes a method based on the analysis of the emission spectrum of the ablation plasma and on the sample position measuring by means of laser triangulation. The frequencies are not greater than 10 Hz. However, this spectral analysis of the ablation plasma allows to obtain only information about the chemical elements involved in the process. The patent application n° US2007296966 (2007) relates to a spectroscopy plasma laser system (LPS) for spectral detection of the ablation plasma and the analysis of its chemical composition. The system determines almost in real-time (it depends on the acquisition and delay time of the detector) the chemical concentration of specific elements and the relative intensity of the emission signal in function of the material depth. The frequencies are 20 Hz. This method requires however a Preliminary calibration. The US patent n° US 2006084957 (2007) describes the ablation process, monitored by a probe beam allowing the qualitative measure of the properties of the ablated target and/or the features of the pulsed beam generating ablation (diameter beam, density of energy per pulse, pulse repetition-rate etc...) . The probe can be analyzed by means of a visor, a CCD or a spectroscopy unit for the spectral features of the plasma-plume. A feedback signal generated by a closed control system will serve to optimize the process parameters. The limit is not to provide information about the morphological change of the ablated material. Finally, the US patent n° US3700850 (1972) describes a method wherein the ablated material quantity for laser pulse is esteemed by the time used by the shock-wave to cross the sample and reach the detector mounted on the lower surface of the sample to be treated. The frequencies are very low (few tens of Hz). In addition, since it is needed to integrate a sensor on the lower surface of the sample, this method is not applicable to micro-drilling.

Therefore in the state of the art, there are not known systems able to monitor exactly the variation of the ablation depth during the process, this aspect representing the peculiarity and the novelty of this specific patent. From the documentation available in the state of the art, no one document solves the technical problem solved by the present invention. The system for sensor monitoring according to the invention, whenever introduced in the production systems, solves the above-described technical problems and allows to reduce drastically the cost linked to the post-process quality controls or the residues due to the defective processing.

The system for measuring the variation of the ablation depth during the ablation process has the following properties: very high resolution. (0.4 micrometers, improvable up to 0.2 micrometers by using commercial laser diodes with lower wave length); instantaneous response (for example in case of laser micro-processing, faster in the time interval between two following laser pulses and compatible with frequencies of 100 kHz o greater order) and contemporary to the micro-processing process; compactness, easiness and inexpensiveness. In addition the method does not require sample pretreatments.

The invention effectiveness has been demonstrated by testing the new system in a laser micro-drilling experiment in which there were used a steel plate 50 micrometers thick as target, a fiber ultra-fast pulse source as process laser (120 ps; 100 kHz; 100 micro-J) and a commercial laser diode at 830 nm with photodiode integrated as sensor. The new method can be used, principally, also with nonmetal materials, diffusive surfaces and to possibly moving samples.

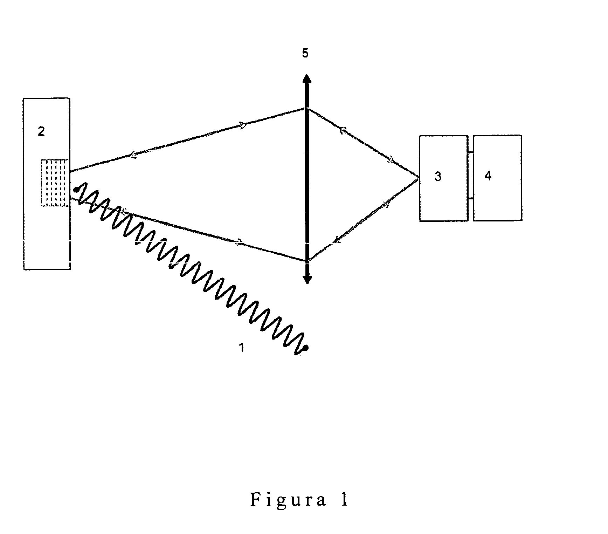

The industrial application is represented by online monitoring the laser processing involving the ablation: micro-drilling, cutting, marking etc.... The industrial importance is to be considered very high, considering the great market in continuous growth of the laser processing and the increasing demand on processing sensors which can function during the process. These and other advantages will be better highlighted in the detailed description of the invention which refers to the drawings 1-3, figures 1, 2, and 3 (a, b, c, d), where it is shown a preferable embodiment of the present invention, which is absolutely not limiting.

In particular:
Fig. 1 shows the base scheme of the system;
Fig. 2 shows an embodiment of the system;
Fig. 3 (a, b, c, d) shows the microscopy images of the drilled sheet and the scheme of the hole section compared to the dimension of the beam of the monitoring laser diode.

Referring to said figures, in particular to figure 1, the ablation, i.e. the material removing from areas localized on the surface of the sample (2) , is obtained by means of exposition to intense laser pulses (1) . Alternatively, the ablation can be obtained by means of bombarding with particles beams or by means of plasma chemical attacks. The measuring system is based on a laser diode (3) with photodiode (4) integrated or with an outer photodiode. The radiation emitted by the laser diode, which can be substituted by any semiconductor laser, both bipolar (for ex. heterostructure laser, quantum well laser, quantum wire laser, quantum dot laser, vertical cavity surface emitting laser) and unipolar (for ex, interband or intersubband quantum cascade lasers) is sent in the area subjected to ablation by means of a lens (5) , which can be substituted also by an optic fiber. A portion of such radiation is sent again in the cavity of the laser diode by the same lens (or by the optic fiber), after being reflected or propagated by the surface subjected to ablation. This fact gives rise to self-mixing phenomena in the cavity of the laser diode. The self-mixing signal analysis, detected by the integrated photodiode, allows to measure the progression of the ablation front, the variation of the surface level in the sample area subjected to ablation. In the embodiment shown in drawings 1-3, the sample is held stationary during the micro-drilling process fixed to a sample-door integral to the measuring laser diode. In the embodiment shown in the drawings 1-3, the sample is fixed to the measuring laser diode thanks to an integral mounting to the latter. Alternatively, the sample can move during the process both for needs or working easiness, and since it is subjected to accidental mechanic vibrations. In such case, the progression of the ablation front measuring can be obtained for difference between two displacement to be measured at the same time: (i) the displacement of the surface subjected to ablation; (ii) the displacement of the sample along the direction of the measuring laser beam. Advantageously, also the measuring of the displacement component of the sample along the direction of the measuring laser beam can be obtained by means of a system based on the self-mixing interferometry, integral to the laser diode used for measuring the variation of the ablation depth.

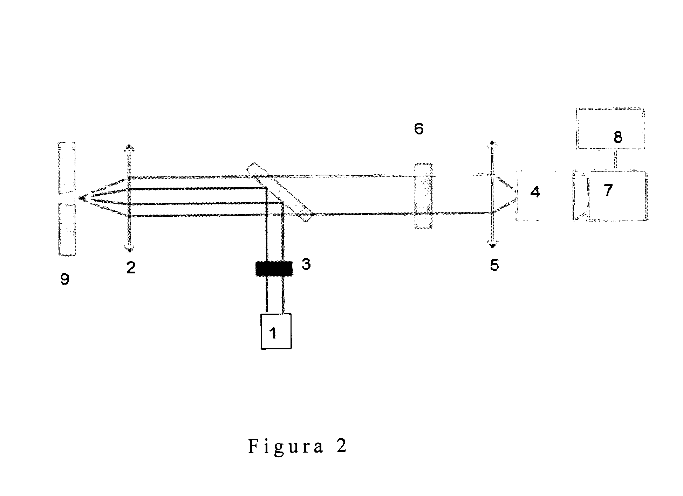

Referring to figure 2, the ablation source is a prototype of laser (1) with ytterbium doped optic fiber, with pulses of 120 ps and wave length of 1064 nm. The maximum laser power is 10 W at 100 kHz, corresponding to energies of 100 µJ per pulse. The laser drilling occurs using the "percussion drilling" technique in air focalizing constantly the fiber laser beam on the surface of a stainless steel sheet (9). In the demonstrator the sheet thickness is 50 microns. It is used a plane convex lens (2) of focal length f - 50 mm. The exposition time is controlled by means of a mechanic switch (3). A divisor of dichroic beam allows to align along the same axis both the fiber laser beam and the laser diode (4) one used as sensor in the self-mixing inteferometry. The interferometer is made up of the laser diode (4) emitting at 830 nm, a collimation lens (5), a variable attenuator (6) allowing to vary the light fraction back-diffused in the cavity of the laser diode and by a monitoring photodiode (7), integrated in the used laser diode. The radiation back-diffused interferes with the optic field in the cavity of the laser diode and modulates the optic power measured by the monitoring photodiode. In the moderated feedback regime, obtained adjusting suitably the variable attenuator (6) , the signal of the monitoring photodiode (7) shows saw teeth fringes, each one corresponding to the variation of the optic path of a quantity equal to half wave length of the radiation emitted by the laser diode (4), i.e. 0.4 microns in this specific case. In a conventional use of the self-mixing interferometry, from the sign of the slope of the saw tooth it can be defined the displacement direction of the target without ambiguity. In the specific case object of this patent, the fringe counting and the observation of the line shape allow to monitor the progression of the ablation front at the bottom of the hole during the laser ablation process. The signal of a monitoring photodiode (7) is coupled to the amplification electronics and analysis of signal (8). The system can be aligned preliminarily maximizing the amplitude of the self-mixing fringes generated by the displacement of the metal sheet, obtained by means of a motorized translation step. Saw teeth fringes are observed when the distance of the sheet is increased. A similar line shape is expected during the ablation, due to the progression of the irradiated metal surface. The alignment of the laser diode beam is obtained creating on the surface to be ablated a spot of lower diameter and concentric with respect to the one of the fiber laser.

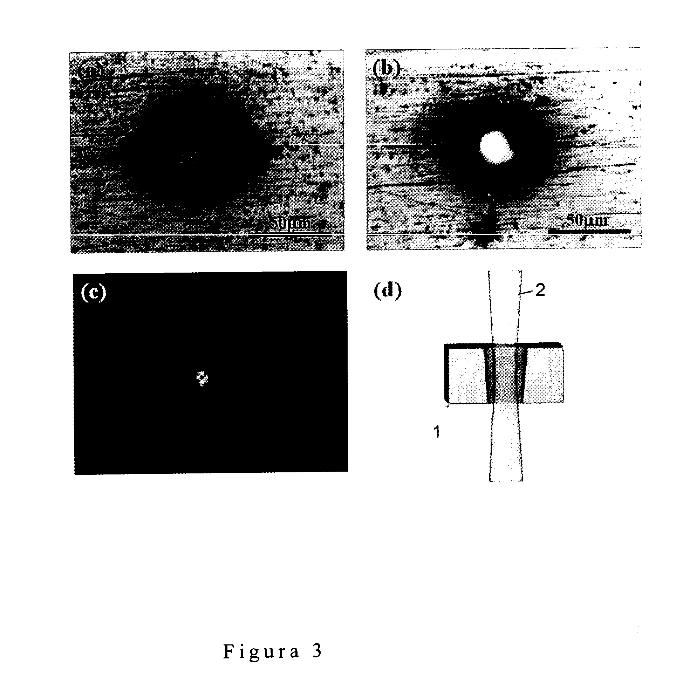

Referring in particular to figure 3, there are shown the microscopy images of the entry hole (a) and the exit one (b), the spot dimension of the beam of the monitoring laser diode (c) and the section scheme of the alignment of the probe beam with the hole (d) and the metal target (1). The Rayleigh length of the probe beam (2) is greater than the thickness of the sheet, such that the interactions with the hole walls are insignificant. In addition in the state of the art, there are known numeric algorithms able to develop phase analysis of an interferometric signal. The method at the base of the present invention can be advantageously integrated by using one of such numeric algorithms, for example the one called "phase-unwrapping", which allows to read more exactly the signal, with a resolution of a greater order.

It is the first use of self-mixing laser technology for measuring the displacement of the ablation front of static samples. Until now, the self-mixing has been used to detect the displacement of entire samples. The new method for measuring the progression state of the laser micro-drilling process by means of ablation is characterized by the following properties: instantaneous response, in-situ functioning and simultaneity to the ablation process; very high resolution, compactness, easiness and inexpensiveness, In addition the method does not require sample pretreatments.

## Claims

1. Laser system for measuring in real time the variation of the laser ablation depth by means of self-mixing interferometry **characterized by**: at least a reflecting surface subjected to ablation, at least a laser diode with an integrated photodiode for the self-mixing signal detecting, at least a lens for sending a portion of the radiation emitted by the laser diode on the surface subjected to ablation and for sending in the cavity of the laser diode a portion of the radiation emitted by the laser diode and back-reflected by the surface subjected to ablation.

2. System according to claim 1, wherein said reflecting surface subjected to ablation is substituted by a diffusive surface subjected to ablation.

3. System according to claim 1 or 2, wherein the ablation is obtained by means of bombarding with particle beams.

4. System according to claim 1 or 2, wherein the ablation is obtained by means of plasma chemical attacks.

5. System according to any one of claims 1 to 4, wherein said laser diode is substituted by a semiconductor laser both bipolar and unipolar.

6. System according to any one of claims 1 to 5, wherein said lens is substituted by an optic fiber.

7. System according to any one of claims 1 to 6, wherein said photodiode integrated is substituted by an outer photodiode.

8. Method for measuring in real time the variation of the laser ablation depth, **characterized by** the following steps:
- alignment obtained taking care that on the surface to be ablated, the spot of the measuring laser diode beam has lower diameter and is concentric to the laser beam used for ablation;
- receiving the back-diffused radiation of the laser diode inside the same laser diode and its monitoring by measuring the self-mixing signal generated by means of the integrated photodiode;
- analysis of the self-mixing signal.

9. Method according to claim 8, wherein said self-mixing signal is given by saw teeth fringes each corresponding to the variation of the optic path equal to 0.4 microns, i.e. equal to half the wave length of the laser diode or the used semiconductor laser.

10. Method according to claim 9, wherein the sign of the slope of the saw teeth defines the direction of the ablation front progression.

11. Method according to claim 10, wherein the fringe counting measures the ablation front progression.

12. Method according to any one of claims 8 to 11, wherein said self-mixing signal is analyzed in real time with a phase-unwrapping numeric algorithm.

13. Method according to any one of claims 8 to 12, wherein the sample subjected to ablation is displaced during the ablation process, **characterized by** the following steps:
- measuring the displacement component of the sample along the direction of the measuring laser beam;
- subtraction of the displacement component of the sample along the direction of the measuring laser beam, during the ablation phase, from the displacement measure of the surface subjected to ablation.

14. Method according to claim 13, wherein the measuring of the displacement component of the sample along the direction of the measuring laser beam is obtained with a system for measuring the displacement of a target, by means of self-mixing interferometry, integral to the laser diode for measuring the variation of the ablation depth.
